# EUROPEAN PATENT APPLICATION

(11) **EP 3 869 668 A1**
(43) Date of publication of application: **25.08.2021**
(21) Application number: 20158215.2
(22) Date of filing: 19.02.2020
(51) Int. Cl.: H02K 1/08, H02K 1/27, H02K 1/02, H02K 1/17, H02K 1/28, H02K 15/03

(54) **PERMANENT MAGNET MODULE FOR A PERMANENT MAGNET MACHINE**

(71) Applicant: Siemens Gamesa Renewable Energy A/S, 7330 Brande (DK)
(72) Inventor: Thougaard, Hans-Joergen, 8600 Silkeborg (DK); Valbjoern, Jesper, 6000 Kolding (DK)
(74) Representative: Aspacher, Karl-Georg

(57) **Abstract**

The present invention describes a permanent magnet module (101) for a permanent magnet machine (10), the permanent magnet module (101) comprising a baseplate (301), at least a permanent magnet (200) attached to the baseplate (301) and a cover (601) for at least partially covering the permanent magnet (200). The cover (601) includes a stainless steel having a high magnetic permeability.

## Description

### Field of invention

The present invention relates to a permanent magnet module including a support and a magnet for a permanent magnet machine.

### Art Background

An electric machine, such as an electric generator installed in a wind turbine, typically comprises a rotor which rotates relative to a stator around a rotational axis. Stator and rotor are separated from each other by an airgap, circumferentially extended around the rotational axis. The airgap provides the necessary distance in order to be sure that the rotating part are not getting in contact with the stationary part. In a permanent-magnet electric machine the stator typically includes a body having stator radial slots longitudinally extending along an axial direction of the stator and an electric circuit comprising a plurality of copper windings housed in the slots.

The rotor comprises a plurality of permanent magnets modules, each module including a baseplate and one or more permanent magnets attached to the baseplate. The baseplate is attached to the rotor body, so that, in operation, the baseplate is interposed between the respective magnet and the rotor body. In each magnet module a cover is typically provided over the permanent magnet(s) to encapsulate the permanent magnet(s) and hold them in place. The cover may be made of stainless steel or any other non-magnetic material welded or fixed by other means to the respective baseplate. More particularly, the cover may be made of austenitic stainless steel or a polymer compound, in order to hold the magnet in place and to avoid corrosion. The cover made of non-magnetic material adds a further distance to the magnetic airgap between the stator and the permanent magnets. Due to the addition of magnetic distance between the rotating and the stationary part of the electrical machine the induced voltage is lower. Due to this the current in the machine needs to be higher to maintain the torque/electrical power. This influence leads to less efficiency of the electrical machine. Carbon steel covers could also be theoretically used as an alternative, but this will result in high eddy currents in the cover. The term "Carbon steel" is used in reference to steel, which is not stainless steel, in this use "Carbon steel" may include alloy steels.

It is therefore desirable to provide a permanent magnet module, which may efficiently at the same maintain the advantages and remove the inconveniences, which are described above with reference to the permanent magnet modules of the prior art.

### Summary of the Invention

This objective may be solved by the permanent magnet module according to the independent claim. Advantageous embodiments of the present invention are described by the dependent claims.

According to the present invention a permanent magnet module for a permanent magnet machine is provided. The permanent magnet module comprises a baseplate, at least a permanent magnet attached to the baseplate and a cover for at least partially covering the permanent magnet. The cover includes a stainless steel having a high magnetic permeability.

According to possible embodiments of the invention, the permanent magnet machine may be an electrical generator. Particularly, but not exclusively, the electrical generator may be used in a wind turbine.

According to embodiments of the present invention, the cover includes a martensitic stainless steel. According to other embodiments of the present invention, the cover includes a ferritic stainless steel.

Due to a higher magnetic permeability in martensitic and ferritic stainless steel the magnetic airgap between the stator and the magnets of the permanent magnet module can be reduced. The magnetic reluctance in the electrical machine is consequently reduced and the induced voltage in the permanent magnet machine is increased. In an electrical generator the current and thereby the losses can be reduced for the same power output or the power output can be increased at the same current.

The permanent magnet may include a bottom surface facing the baseplate, a top surface opposite to the bottom surface and at least a lateral surface connecting the bottom surface with the top surface. The cover at least partially covers the top surface and the lateral surface of the permanent magnet. According to embodiments of the present invention where the cover includes a martensitic stainless steel, the magnetic permeability of the cover at the top surface of the permanent magnet is higher than the magnetic permeability at the lateral surface of the permanent magnet. This may be done by heat treatment. Differentiating the magnetic permeability between the top surface and the lateral surface(s) of the cover a flux leakage can be reduced.

According to embodiments of the present invention, the cover is attached to the baseplate, the baseplate including the same material of the cover. The cover may be welded to the baseplate. By using the same type of stainless steel for both the baseplate and the cover the reliability of the welding between these two parts is higher. The welding process between two parts of the same material is easier to control and permits to achieve a high-quality weld. Therefore, a reduction in the occurrence of welding problems between the baseplate and magnet cover are expected.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a cross-sectional view of a permanent magnet machine including a plurality of permanent magnet modules according to the present invention.
Fig. 3 shows a frontal circumferential view of a permanent magnet module according to a first exemplary embodiment of the present invention.
Fig. 4 shows a frontal circumferential view of a permanent magnet module according to a second exemplary embodiment of the present invention.
Fig. 5 shows a frontal circumferential view of a permanent magnet module according to a third exemplary embodiment of the present invention.

### Detailed Description

The illustrations in the drawings are schematically. It is noted that in different figures, similar or identical elements are provided with the same reference signs.

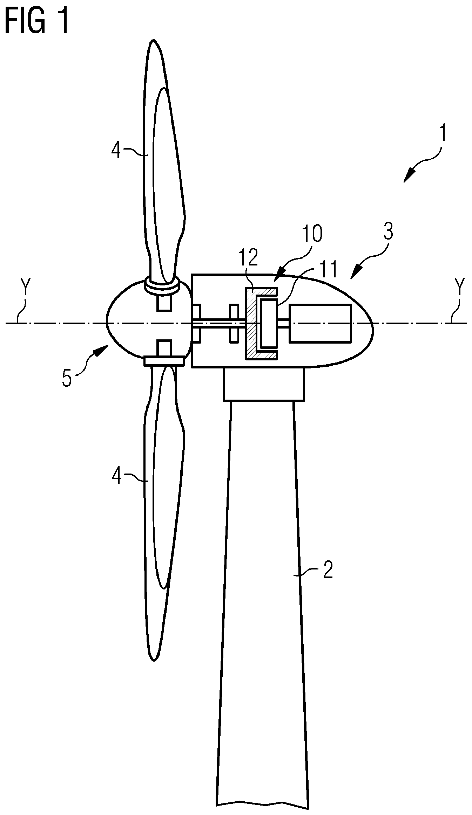

**Figure 1** shows a partial cross-sectional view of a wind turbine 1 comprising a tower 2 which is mounted on the ground at one end and a nacelle 3 which is mounted at the opposite end of the tower 2. The nacelle 3 is rotatably mounted over the tower 2. The nacelle 3 accommodates a permanent magnet machine 10, i.e. an electrical generator, which includes a plurality of permanent magnet modules according to the invention. Furthermore, the wind turbine 10 comprises a hub 5 which is rotatable about a rotor axis Y. When not differently specified, the terms axial, radial and circumferential in the following are made with reference to the rotor axis Y. The wind turbine 1 further comprises at least one blade 4 (in the embodiment of Figure 1, the wind rotor comprises three blades 4, of which only two blades 4 are visible) mounted on the hub 5. The blades 4 extend substantially radially with respect to the rotational axis Y. The permanent magnet machine 10 includes a stator 11 and a rotor 12. The rotor 12 is rotatable with respect to the stator 11 about a longitudinal axis of the permanent magnet machine 10. The terms axial, radial and circumferential in the following are to be intended with reference to the longitudinal axis Y of rotation of the permanent magnet machine 10. In the embodiment of Figure 1, the rotor 12 is radially external with respect the stator 11 and rotatable about the longitudinal axis Y. A circumferential air gap is provided between the stator 11 and the rotor 12. According to other possible embodiments of the present invention (not represented in the attached figures), the rotor 12 is radially internal with respect the stator 11 and rotatable about the longitudinal axis Y. The permanent magnet machine 10 may be a fractional slot concentrated winding electrical generator.

According to other possible embodiments of the present invention (not represented in the attached figures), the present invention may be applied to any type of permanent magnet electric machines, e.g. radial, axial, etc. The present invention may be applied also to integral-slot electric permanent magnet machine.

A plurality of permanent magnets modules (not visible in Figure 1) is attached to the rotor 12 by means of respective baseplates, as detailed in the following. According to other possible embodiments of the present invention (not represented in the attached figures), a plurality of permanent magnets modules may be attached to the stator of a permanent magnet machine.

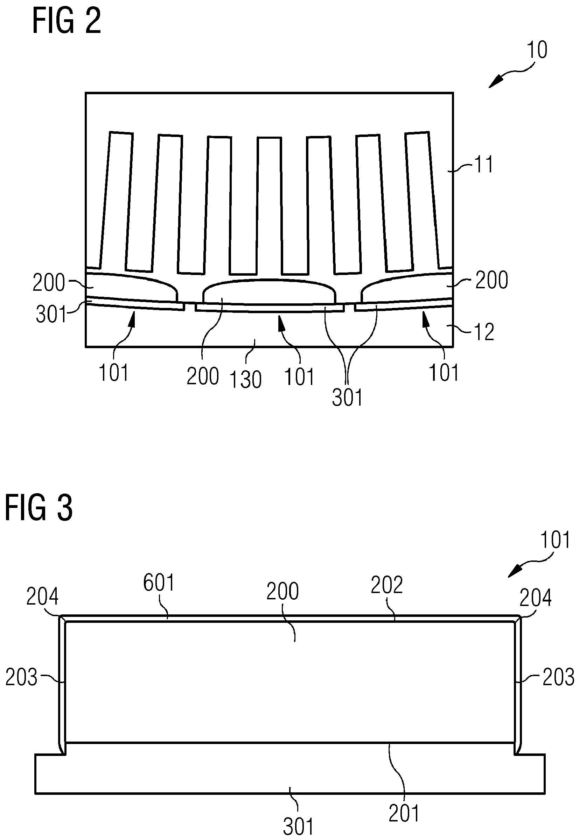

**Figure 2** shows a partial cross-sectional view of the permanent magnet machine 10 including a plurality of permanent magnet modules 101 attached to the rotor 12. The permanent magnet modules 101 are attached to a side of the rotor 12 which faces the stator 11. Each permanent magnet module 101 comprises a permanent magnet 200 and a baseplate 301. According to other embodiment of the present invention (not shown), each permanent magnet module 101 may comprise more than one permanent magnet 200 and more than one baseplate 301. Each of the permanent magnets 200 is attached to a rotor body 130 of the rotor 12 by means of the respective base plate 301. Each base plate 301 of each permanent magnet module 101 is connected to a respective recess 131 provided in the rotor body 130.

**Figure 3** shows a tangential sectional view of a permanent magnet module 101 including a permanent magnet 200 and a respective baseplate 301 attached to the permanent magnet 200. The permanent magnet 200 includes a bottom surface 201 facing the baseplate 301. The bottom surface 201 may be attached to the baseplate 301, for example by gluing. The permanent magnet module 101 further includes a cover 601 covering the permanent magnet 200. The cover 601 and the baseplate 301 are both made of stainless steel. The cover 601 and the baseplate 301 may be both made of the same stainless steel. The cover 601 includes a martensitic stainless steel. According to other embodiments of the invention, the cover 601 may include a ferritic stainless steel. The cover 601 is welded to the baseplate 301. According to other embodiments of the present invention, the cover 601 may be attached to the baseplate 301 by other means. The permanent magnet 200 includes a top surface 202 opposite to the bottom surface 201 and at least a lateral surface 203 connecting the bottom surface 201 with the top surface 202. The cover 601 covers the top surface 202 and the lateral surface 203. The magnetic permeability of the cover 601 at the top surface 202 is higher than the magnetic permeability of the cover 601 at the lateral surface 203. With martensitic stainless steel the difference between magnetic permeability at different portions of the cover 601 may be obtained with respective different heat treatments. If ferritic stainless steel is used, the magnetic permeability will be the same throughout all the cover 601. The permanent magnet 200 has a rectangular shape in the tangential sectional view of figure 3, right angle edges 204 being provided between the top surface 202 and the lateral surface 203. Consequently, also the cover 601 in the transition between the top surface 202 and the lateral surface 203 comprises respective right-angle edges.

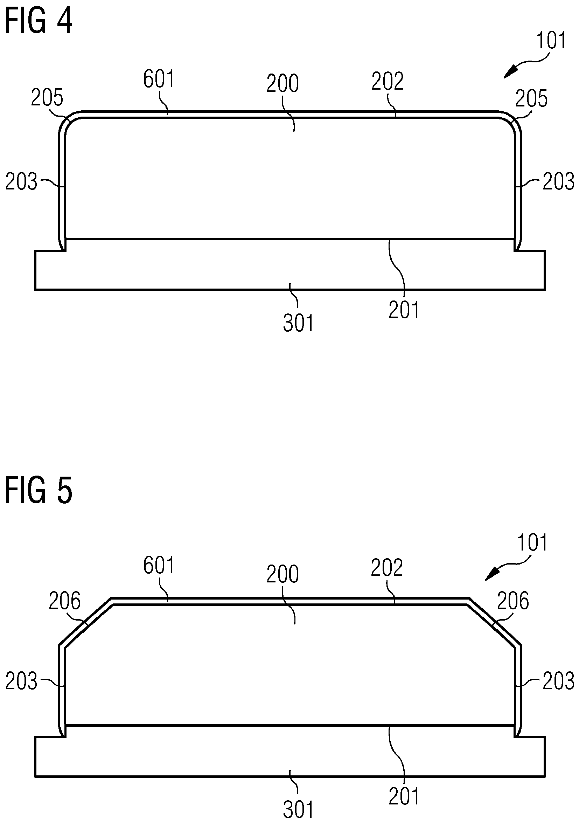

**Figure 4** shows a tangential sectional view of a second embodiment of a permanent magnet module 101 including a permanent magnet 200 and a respective baseplate 301 attached to the permanent magnet 200. The second embodiment differentiates itself from the first embodiment of figure 3 in that curved edges 205 are provided between the top surface 202 and the lateral surface 203. Consequently, also the cover 601 in the transition between the top surface 202 and the lateral surface 203 comprises respective curved edges.

**Figure 5** shows a tangential sectional view of a third embodiment of a permanent magnet module 101 including a permanent magnet 200 and a respective baseplate 301 attached to the permanent magnet 200. The third embodiment differentiates itself from the first and second embodiments of figure 3 in that chamfered edges 205 are provided between the top surface 202 and the lateral surface 203. Consequently, also the cover 601 in the transition between the top surface 202 and the lateral surface 203 comprises respective chamfered edges.

Different shapes of the permanent magnet 200 and consequently of the cover 601 may be used to optimize the magnetic flux of the permanent magnet machine 10, in particular by minimizing the flux leakages.

## Claims

1. Permanent magnet module (101) for a permanent magnet machine (10), the permanent magnet module (101) comprising a baseplate (301), at least a permanent magnet (200) attached to the baseplate (301) and a cover (601) for at least partially covering the permanent magnet (200), wherein the cover (601) includes a stainless steel having a high magnetic permeability.

2. Permanent magnet module (101) according to claim 1, wherein the cover (601) includes a martensitic stainless steel.

3. Permanent magnet module (101) according to claim 2, wherein the permanent magnet (200) includes a bottom surface (201) facing the baseplate (301) and a top surface (202) opposite to the bottom surface (201) and at least a lateral surface (203) connecting the bottom surface (201) with the top surface (202), the cover (601) at least partially covering the top surface (202) and the lateral surface (203), the magnetic permeability of the cover (601) at the top surface (202) being higher than the magnetic permeability of the cover (601) at the lateral surface (203).

4. Permanent magnet module (101) according to claim 1, wherein the cover (601) includes a ferritic stainless steel.

5. Permanent magnet module (101) according to any of the previous claims, wherein the cover (601) is attached to the baseplate (301), the baseplate (301) including the same material of the cover (601).

6. Permanent magnet module (101) according to claim 5, wherein the cover (601) is welded to the baseplate (301).

7. Permanent magnet machine (10) including a plurality of permanent magnet modules (101, 102, 103) according to any of the previous claims.

8. Wind turbine (1) comprising an electrical generator (10) according to claim 7.
